# EUROPÄISCHE PATENTSCHRIFT

(11) **EP 0 922 230 B1**
(45) Veröffentlichungstag und Bekanntmachung des Hinweises auf die Patenterteilung: **03.04.2002**
(21) Anmeldenummer: 97934452.0
(22) Anmeldetag: 09.07.1997
(51) Int. Cl.: G01P 3/44

(54) **ANORDNUNG ZUR ERFASSUNG DES DREHVERHALTENS EINES RADES**
ARRANGEMENT FOR THE DETECTION OF THE ROTATIONAL BEHAVIOUR OF A WHEEL
DISPOSITIF DE DETECTION DU COMPORTEMENT DE ROTATION D'UNE ROUE

(30) Priorität: 28.08.1996 DE 19634715
(43) Veröffentlichungstag der Anmeldung: 16.06.1999
(73) Patentinhaber: Continental Teves AG & Co. oHG, 60488 Frankfurt (DE)
(72) Erfinder: LORECK, Heinz, D-65510 Idstein (DE); ZYDEK, Michael, D-35428 Langgöns (DE); FEY, Wolfgang, D-65527 Niedernhausen (DE); LOHBERG, Peter, D-61381 Friedrichsdorf (DE)
(74) Vertreter: Blum, Klaus-Dieter
(86) Internationale Anmeldenummer: EP9703618
(87) Internationale Veröffentlichungsnummer: WO9809173

(56) Entgegenhaltungen:
- EP-A- 0 727 666
- US-A- 4 076 330
- US-A- 5 486 759

## Beschreibung

Die Erfindung bezieht sich auf eine Anordnung zur Erfassung des Drehverhaltens eines Rades oder eines anderen rotierenden Körpers, mit einem Sensorelement und einer steuerbaren Stromquelle, die einen das Drehverhalten darstellenden eingeprägten Strom (ein binäres Stromsignal) liefert, und mit einer Auswerteschaltung.

Ein besonders wichtiger Anwendungsfall für Anordnungen dieser Art ist das Messen von Raddrehzahlen als Eingangsgröße für ein Kraftfahrzeug-Regelungssystem, z.B. für ein Antiblockiersystem (ABS), für eine Antriebsschlupfregelung (ASR), für eine Fahrstabilitätsregelung (FSR, ASMS) etc. Zur Messung anderer Rotationsbewegungen im Maschinenbau sind solche Anordnungen ebenfalls geeignet.

Anordnungen und Vorrichtungen zur Erfassung der Drehzahl eines Fahrzeugrades sind bereits in vielfältigen Ausführungsformen bekannt und auf dem Markt. Die Meßsysteme, die im Prinzip aus einem Meßwertgeber in Form eines Zahnrades oder eines Encoders und aus einem Meßwertaufnehmer bestehen, lassen sich grundsätzlich als passive oder aktive Systeme bzw. Sensoren ausbilden. Bisher wurden aus technologischen und preislichen Gründen induktive Sensoren, also passive Meßsysteme, bevorzugt, doch gewinnen aktive Sensoren an Bedeutung.

In der WO 95/17680 (P 7805) ist ein aktiver Drehzahlsensor beschrieben. Nach dieser Schrift besteht die Meßvorrichtung grundsätzlich aus einem mit dem Rad rotierenden Encoder, aus einem magnetoresistiven Sensorelement mit einem als Vorspannmagnet dienenden Permanentmagneten und aus einer Signalverarbeitungsschaltung, die in einem integrierten Schaltkreis untergebracht ist. Die Ausgangssignale des Sensors werden einer zentralen Auswerteschaltung zugeleitet.

Aus der DE 44 34 180 A1 (P 7748) ist eine Schaltungsanordnung zur Auswertung des Ausgangssignals eines aktiven Sensors bekannt. Das Ausgangssignal des Sensors ist ein binäres Stromsignal, dessen Frequenz die Information über die Drehbewegung enthält. Der aktive Sensor stellt eine steuerbare Stromquelle dar, die einen eingeprägten Strom liefert. Über eine zugehörige Auswerteschaltung ist der aktive Sensor an die Fahrzeugbatterie angeschlossen und wird aus dieser mit elektrischer Energie versorgt.

Bei einem Kraftfahrzeugregelungssystem mit Raddrehzahlsensoren werden im allgemeinen die Ausgangssignale der einzelnen aktiven Sensoren über ein 2-adriges Kabel zu einer zentralen Auswerteschaltung geführt, die an der Fahrzeugbatterie angeschlossen ist und über dieses 2-adrige Kabel die elektrische Energie für den Betrieb der aktiven Sensoren liefert. Es wurde auch schon vorgeschlagen, ein 1-adriges Kabel zu verwenden und die zweite Ader durch Stromführung über die Fahrzeugkarosserie zu ersetzen (P 8693).

Die gattungsbildende Druckschrift EP 0 727 666 A1 offenbart eine Anordnung zur Erfassung des Drehverhaltens eines Rades, mit einem aktiven Sensor, der ein Sensorelement umfaßt, einem Modulator und mit einer Auswerteschaltung, der als Eingangssignal ein das Drehverhalten darstellendes Signal mit einem überlagerten Status- oder Zusatzsignal eines Binär- oder Analogsensors zugeführt wird. Dabei werden als Signale des aktiven Sensors bzw. des Binärsensors jeweils Spannungssignale über eine zur Spannungsversorgung dieser Sensoren dienende Leitung vom Modulator des aktiven Sensors und vom Modulator des Binärsensors an die Auswerteschaltung geliefert.

Aus der Patentschrift US 4,076,330 ist eine Sensoranordnung für eine Blockierschutzeinrichtung für Fahrzeugbremsen bekannt. Dieses Dokument offenbart unter anderem eine Überwachungseinrichtung, die bei einer Störung der Sensoren oder innerhalb der Elektronik den entsprechenden Regelungskanal oder auch den gesamten Regler abschaltet, um kritische Bremswegverlängerungen oder auch Giermomente zu verhindern.

Der Erfindung liegt nun die allgemeine Aufgabe zugrunde, den Gesamtaufwand für die Messung und Auswertung der sensierten Informationen und insbesondere den Aufwand für die Verkabelung zwischen den einzelnen Sensoren und der Auswerteschaltung zu verringern, oder, anders betrachtet, die Nutzung der notwendigen Verkabelung zwischen den einzelnen aktiven Sensoren und der (zentralen) Auswerteschaltung zu verbessern.

Es hat sich herausgestellt, daß diese Aufgabe durch die im Anspruch 1 beschriebene Anordnung gelöst wird, deren Besonderheit darin besteht, daß die Anordnung ein Sensormodul aufweist, das das Sensorelement, eine Stromquelle und den Modulator umfaßt, wobei der Modulator in Abhängigkeit von den Signalen des Sensorelementes und von externen Signalen, die von einer externen Signalquelle stammen bzw. über einen zusätzlichen Anschluß in das Sensormodul eingespeist werden, die Stromquelle steuert, die als Ausgangssignal des Sensormoduls ein das Drehverhalten darstellendes, eingeprägtes Stromsignal an die Auswerteschaltung liefert.

Mit der erfindungsgemäßen Anordnung wird also eine mehrfache Nutzung der Verkabelung zwischen dem aktiven Sensor und der Auswerteschaltung ermöglicht. Hierzu wird von einem besonderen Systemkonzept Gebrauch gemacht, bei dem das ein Sensorelement und eine steuerbare Stromquelle enthaltende Sensormodul mit einem Modulator ausgerüstet wird, der in Abhängigkeit von einem zusätzlichen externen Signal die den eingeprägten Strom liefernde Stromquelle steuert und dem Ausgangssignal des Sensors ein zusätzliches Signal aufprägt oder überlagert bzw. ein Statussignal hinzufügt und der zentralen Auswerteschaltung zuführt. Die Verkabelung wird also mehrfach genutzt.

In der Auswerteschaltung ist ein Decoder oder eine Erkennungsschaltung enthalten, die das Status- oder Zusatzsignal identifiziert und auswertet.

Nach einem vorteilhaften Ausführungsbeispiel der Erfindung enthält das Sensormodul außerdem einen weiteren Schaltkreis, nämlich einen Beobachter, der an den Leitungen, die das Sensormodul mit der Auswerteschaltung verbinden, angeschlossen ist, der über diese Leitungen von der Auswerteschaltung gelieferte Informationen aufnimmt und der in Abhängigkeit von diesen Informationen die Akzeptanz oder Verarbeitung der über den zusätzlichen Anschluß zugeführten Informationen steuert oder überwacht. Es ist z.B. möglich, das System so auszulegen, daß der Beobachter die über den zusätzlichen Anschluß zugeführten Informationen nur zu bestimmten Zeiten oder unter bestimmten Bedingungen abfragt und berücksichtigt.

Nach einem weiteren Ausführungsbeispiel der Erfindung besteht das Sensorelement des Sensormoduls aus mehreren sensorischen Einheiten zum Abtasten des Encoders bzw. Meßwertgebers nach unterschiedlichen Kriterien und/oder zum redundanten Erkennen von Meßwerten. Der letztgenannte Fall ermöglicht z.B. die Überwachung der ordnungsgemäßen Funktionen.

Nach einem weiteren Ausführungsbeispiel der Erfindung ist an dem zusätzlichen Anschluß des Sensormoduls eine externe Signalquelle angeschlossen, die unabhängig von den Sensorelementen ein von der Drehbewegung des Encoders oder eines anderen rotierenden Meßwertgebers abgeleitetes Signal erzeugt. Auch andere, sensorisch ermittelte Statussignale können über den zusätzlichen Anschluß des Sensormoduls eingespeist und über den Modulator sowie über die Signalleitungen zu der Auswerteschaltung weitergeleitet werden. Es kann vorteilhaft sein, diese Statussignale vor dem Weiterleiten in dem Modulator aufzubereiten oder auszuwerten, wobei diese Vorgänge von dem Beobachter gesteuert werden können.

Weitere Merkmale, Vorteile und Anwendungmöglichkeiten der Erfindung gehen aus der folgenden Beschreibung weiterer Einzelheiten von Ausführungsbeispielen der Erfindung anhand der beigefügten Abbildungen hervor.

Es zeigen:
- Fig. 1: schematisch vereinfacht, im Blockschaltbild die wichtigsten Komponenten einer Anordnung der erfindungsgemäßen Art,
- Fig. 2: in gleicher Darstellungsweise Beispiele für Sensorelemente der Anordnung nach Fig. 1,
- Fig. 3: in gleicher Darstellungsweise Beispiele für die Beschaltung des zusätzlichen Anschlusses der Anordnung nach Fig. 1,
- Fig. 4: Beispiele für den Aufbau von Sensormodulen der in Fig. 1 gezeigten Art und
- Fig. 5: im Diagramm einige Beispiele für den grundsätzlichen Verlauf und die Modulation des zur Auswerteschaltung übertragenen Signals der Anordnung nach Fig. 1.

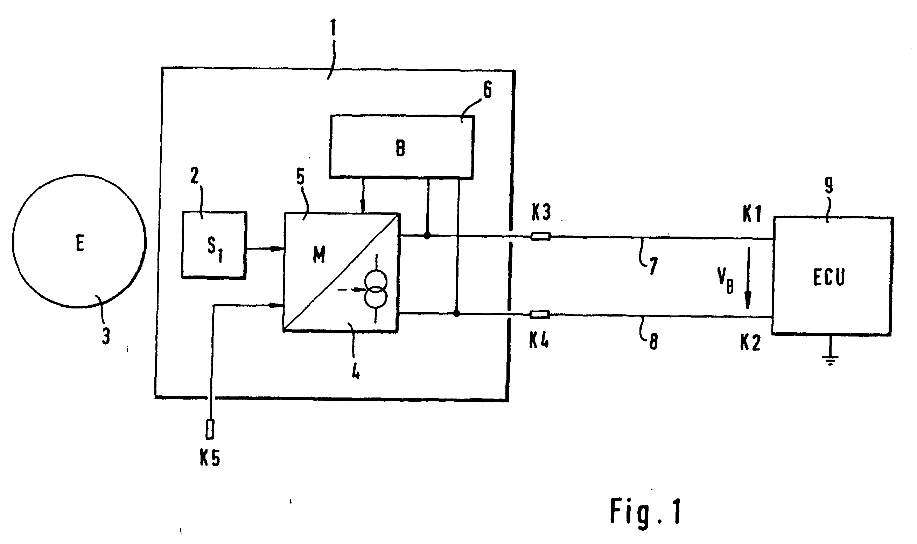

Nach Fig. 1 besteht eine Anordnung nach der Erfindung im wesentlichen aus einem Sensormodul 1, das ein Sensorelement 2 (S₁) enthält, welches in bekannter Weise mit einem Encoder 3 magnetisch gekoppelt ist. Der Encoder 3 oder Meßwertgeber kann in Form einer Zahnscheibe oder einer mit magnetischen Arealen versehenen Rades ausgebildet sein. Der Encoder rotiert mit dem Körper, dessen Drehverhalten gemessen werden soll, und ist mit dem Sensorelement 2 magnetisch gekoppelt ist, so daß das Sensorelement 2 ein Wechselsignal abgeben kann, dessen Frequenz der Drehgeschwindigkeit des Encoders 3 entspricht.

Die vorliegende Erfindung bezieht sich auf aktive Sensoren. Das Sensormodul 1 enthält daher eine steuerbare Stromquelle 4, die einen eingeprägten Strom liefert. Zur Übertragung des Sensorsignals genügt ein Wechsel zwischen zwei vorgegebenen Strom- amplituden. Die Frequenz oder die Zeitdauer des Stromamplituden-Wechsels enthält die Information über die zu messende Drehzahl.

Das Sensormodul 1 enthält außerdem einen Modulator 5 (M), der in Abhängigkeit von dem Ausgangssignal des Sensorelementes 2 (S₁) und von einem über einen zusätzlichen Anschluß K5 von einer externen Signalquelle gelieferten Information die Stromquelle 4 steuert. Dem binären Stromsignal, das die Drehzahl darstellt, ist folglich ein zusätzliches, über den zusätzlichen Anschluß K5 geliefertes, erforderlichenfalls aufbereitetes oder ausgewertetes Signal, das auch ein Statussignal sein kann, überlagert.

Schließlich enthält das Sensormodul 1 in der in Fig. 1 dargestellten Ausführungsform noch eine als Beobachter 6 bezeichnete Schaltung, deren Eingänge E₁, E₂ an die Übertragungs- oder Signalleitungen angeschlossen sind. Die Ausgänge K3, K4 des Sensormoduls 1 führen zu den Anschlußleitungen 7,8. Der Beobachter 6 erkennt vorgegebene Signalzustände auf den Signalleitungen 7,8, die das Sensormodul mit einer externen Auswerteschaltung 9 (ECU) verbinden. Der Beobachter 6 überwacht und steuert den Modulator 5 in Abhängigkeit von dem Signalzustand auf den Verbindungsleitungen 7,8. Beispielsweise kann über den Beobachter 6 die Akzeptanz der über den Anschluß K5 zugeführten zusätzlichen Signale oder Statussignale in Abhängigkeit von vorgegebenen Kriterien, Signalzuständen oder Zeitvorgaben gesteuert werden.

Über die Anschlußklemmen K1, K2 der Auswertungsschaltung 9 wird in einem Ausführungsbeispiel der Erfindung, auf das sich Fig. 1 bezieht, die steuerbare Stromquelle 4 mit elektrischer Energie versorgt. Die Spannung V_{B} zwischen den Klemmen K1 und K2 symbolisiert beispielsweise die Spannung einer Fahrzeugbatterie.

Ein Decoder oder eine Erkennungsschaltung, die das über die den Zusatzanschluß K5 eingespeiste Status- oder Zusatzsignal identifiziert und auswertet, ist ebenfalls in der Auswerteschaltung 9 enthalten.

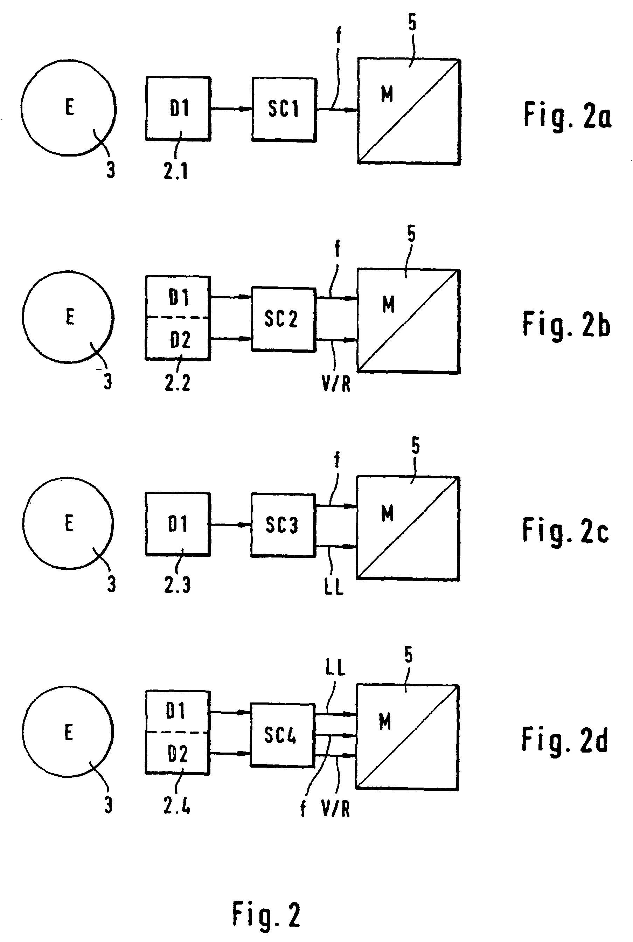

In den Fig. 2a) bis 2d) sind einige Beispiele 2.1 bis 2.4 für Sensorelemente 2 (Fig.1) symbolisch dargestellt. Jedem Sensorelement 2.1, 2.2, 2.3 und 2.4 ist eine Aufbereitungsschaltung SC1 bis SC4 zugeordnet. Diese Schaltkreise SC1 bis SC4 können natürlich als Bestandteile des Modulators (5 in Fig. 1) oder des Sensorelementes (2) ausgebildet werden und sind daher in Fig. 1 nicht dargestellt.

Im Beispiel nach Fig. 2a) symbolisiert ein Sensorelement 2.1 einen bekannten magnetfeldempfindlichen Detektor, z.B. eine magnetoresistive Brücke oder ein Hall-Element, das sich in Verbindung mit den zugehörigen Permanentmagneten als geeignet für eine Anordnung der erfindungsgemäßen Art erwiesen hat. Solche Sensorelemente sind z.B. in der eingangs genannten Schrift WO 95/17680 erläutert.

In Fig. 2b) enthält ein Sensorelement 2.2 zwei Detektoren D1, D2, mit denen um eine Ortsphase zueinander versetzte Signale gewonnen werden, aus denen nach bekannten Prinzipien ein 1-bit-Statussignal zum Bestimmen der Drehrichtung V/R (vor/rück) des Encoders 3 und damit der Drehrichtung des Rades, dessen Drehverhalten gemessen werden soll, abgeleitet wird. In der zugehörigen Signalauswerteschaltung SC2 befindet sich die Elektronik zum Auswerten der detektierten Signale.

Fig. 2c) zeigt in der symbolischen Darstellungsform ein Sensorelement 2.3, das im Zusammenwirken mit dem Encoder 3 in einer Signalaufbereitungsschaltung SC3 neben der Drehzahlinformation f ein Statussignal LL für eine sog. Luftspaltreserve erzeugt. Derartige aktive Bewegungssensoren sind in der DE 44 34 977 A1 und in der DE 44 34 978 A1 beschrieben (P 7727, P 7728).

Fig. 2d) zeigt, daß die Funktionen der beiden Sensorelemente nach Fig. 2 b) und 2c) auch kombiniert werden können.

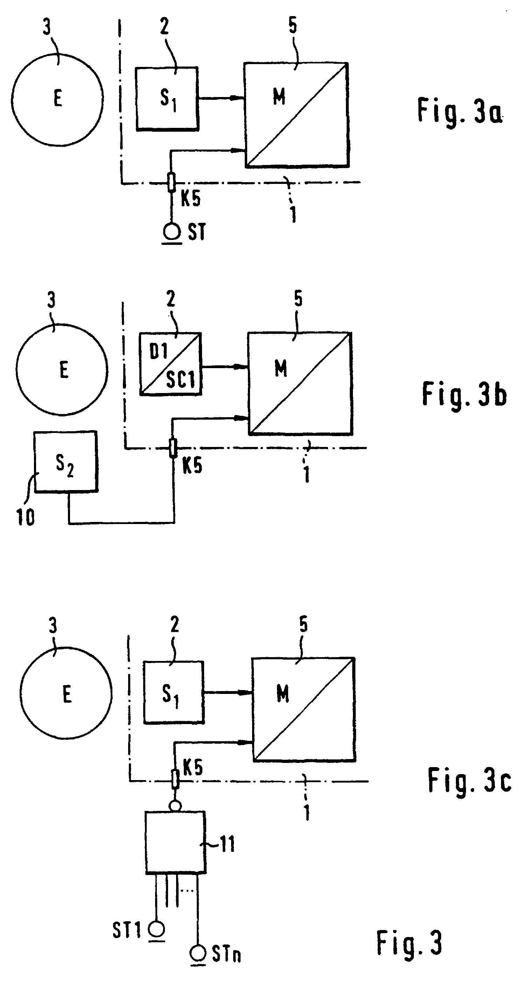

Die Fig. 3a) bis 3c) veranschaulichen das Anschalten von unterschiedlichen externen Signalquellen über den zusätzlichen Anschluß K5 an den Modulator 5 (M) eines Sensormoduls 1. Im Beispiel nach Fig. 3a) - dies ist der einfachste Fall - wird durch Masseanschluß oder Offenhalten des Anschlusses K5 eine bestimmte Information in den Modulator 5 eingespeist. Es sind z.B. Bremsbelagverschleißanzeigen bekannt, die ein derartiges Statussignal liefern. Außerdem könnte der Zustand einer Bremsflüssigkeit überwacht und auf entsprechendem Wege über den Anschluß K5 signalisiert werden.

Nach Fig. 3b) ist über den Anschluß K5 ein zusätzlicher externer Raddrehzahlfühler 10 (S2) vorgesehen, der denselben Encoder 3 (E) abtastet wie das zu dem Sensormodul 1 gehörende Sensorelement 2, jedoch an einem anderen Ort am Umfang des Encoders 3 plaziert ist. Eine solche Auslegung der Meßanordnung ist vorteilhaft, wenn es die technischen Umstände erfordern, zu einer bidirektionalen Drehzahlerfassung zwei separate Drehzahl-Meßelemente zu verwenden. In diesem Fall werden zunächst beide ortsphasenverschobene Drehzahlsignale über den Modulator 5 (M) an die Auswerteeinrichtung 9 (ECU) übertragen, und es wird dann die Richtungserkennung durchgeführt.

Schließlich ist es nach Fig. 3c) noch vorgesehen, ein Summen-Statussignal durch logische Verknüpfung mehrerer sensorischer Statussignale ST1 bis STn unter Verwendung eines externen elektronischen Schaltkreises 11 zu bilden und über die Klemme bzw. den Anschluß K5 dem Sensormodul 1 zuzuführen. Eine solche Anordnung ist z.B. geeignet, ein Warnsignal zu erzeugen, wenn eines oder mehrere der einzelnen Statussignale von ihrem Sollzustand abweichen.

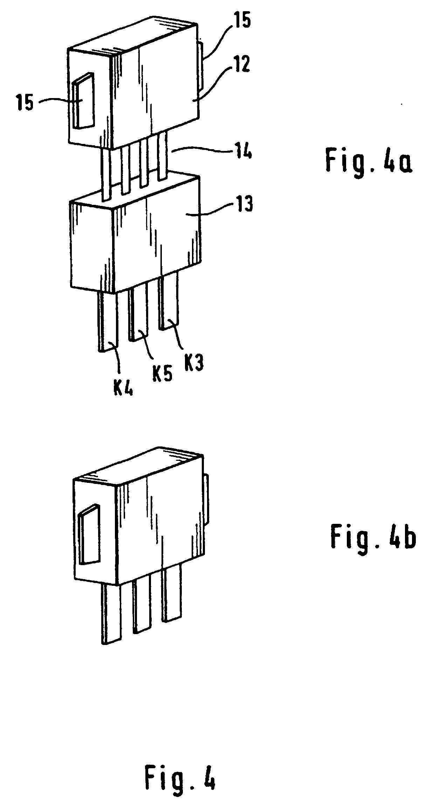

Fig. 4 zeigt in perspektivischer Darstellungsweise die konstruktive Gestaltung bzw. das Äußere eines Sensormoduls der erfindungsgemäßen Anordnung. Nach Fig. 4a) besteht ein Sensormodul aus dem Verbund von zwei, jeweils in einem Gehäuse untergebrachten Funktionseinheiten 12,13. In der Funktionseinheit 12 sind die in Fig. 2a) bis 2d) geschilderten, spezifischen, modulinternen sensorische Einheiten 2.1 bis 2.4 zur Abtastung eines Encoders 3 und die zugehörigen Signalaufbereitungsausschaltungen SC1 bis SC4 eingebettet. In der Funktionseinheit 13 sind der Modulator 5 mit der oder den steuerbaren Stromquellen 4 sowie die als Beobachter 6 bezeichnete Schaltungsanordnung zusammengefaßt. Zum Anschluß der Auswerteschaltung 9 (Fig. 1) und der externen Signalquelle sind wiederum Klemmen K3, K4, K5 aus der Funktionseinheit 13 herausgeführt. Die Funktionseinheiten 12 und 13 sind durch vier einzelne Leiter, die pauschal mit 14 bezeichnet sind, miteinander verbunden. Die Leiter werden so benutzt, daß alle in Fig. 2 schematisiert dargestellten Konfigurationen realisierbar sind. Für den Fall nach Fig. 2d) wird die Signalvorverarbeitungsstufe die Signale V/R und LL zu einem komplexeren Statussignal vorverdichten, welches dann über eine Leitung an den Modulator 5 (M) übertragen wird.

Seitliche Flächen 15 in Fig. 4 dienen der exakten Ausrichtung des dargestellten Sensor-Körpers relativ zur Lesespur auf einem Encoder 3.

Nach Fig. 4 besteht das gesamte Sensormodul aus einem einzelnen Körper, der alle sensorischen und signaltechnischen Baugruppen enthält. Die magnetempfindlichen Detektoren nutzen hier wiederum den Halleffekt oder den magnetoresistiven Effekt.

Das Sensormodul nach Fig. 4a),b) ist ohne den encoderspezifischen Vorspannmagneten dargestellt. Solche Magnete sind am Körper 12 (Fig. 4a) anzubringen. Zweckmäßigerweise wird der Magnet so gewählt, daß die Sensormodule sowohl zum Betrieb mit ferromagnetischen Encodern (z.B. Stahlzahnrädern) als auch zum Betrieb mit magnetisierten Encodern (alternierende Aufeinanderfolge von magnetischen Nord-/Südpolen) genutzt werden können. Details solcher Sensoren sind der zuvorgenannten WO 95/17680 zu entnehmen.

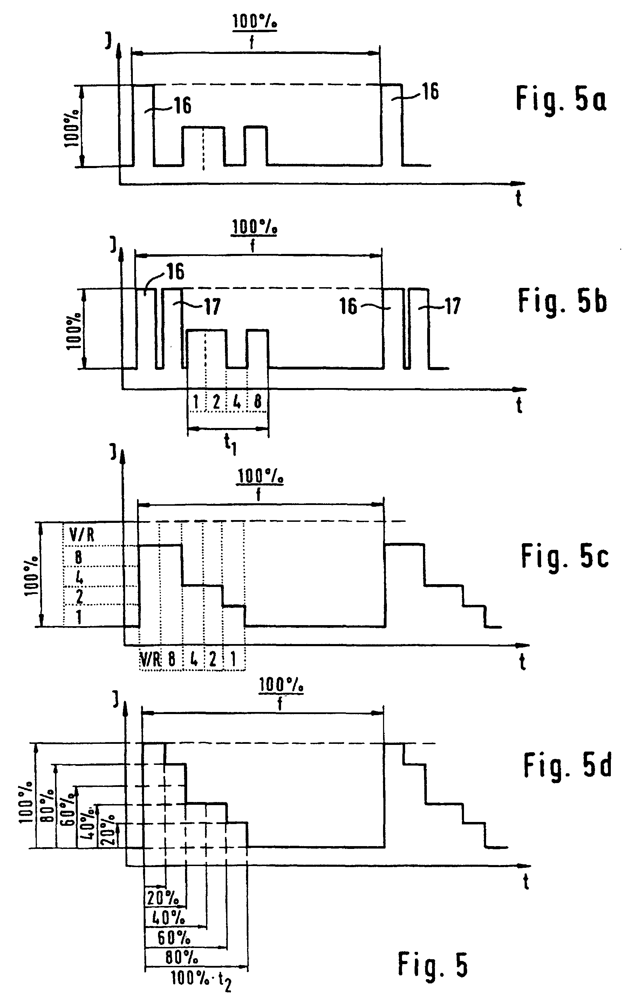

Es gibt Statussignale unterschiedlicher Wichtigkeit. So sollte die Drehrichtungsinformation V/R stets vorhanden sein, während die Information über einen Bremsbelagverschleiß nur auf Abfrage hin ausgewiesen werden muß. Zur Überlagerung des Nutzsignals, das die Drehbewegung wiedergibt, und der Zusatz- oder Statusinformationen sind verschiedene Möglichkeiten bekannt. Es wird jedoch vorgeschlagen, die Zusatzinformation ratiometrisch zu einer Bezugsgröße zu codieren. Bei einer solchen ratiometrischen Codierung bleibt das Verhältnis der einzelnen Signalkomponenten zueinander gleich, wenn sich die Signalamplituden ändern, beispielsweise infolge von Änderungen der Batterie- oder Versorgungsspannung. Die Bezugsgröße kann eine Referenzpulsdauer oder eine Referenzstromamplitude sein. Figuren 5a) bis 5d) zeigen Beispiele codierter Signale, die von dem Sensormodul 1 über die Klemmen K3, K4 zu den Klemmen K1, K2 der Auswerteschaltung 9 (ECU) übertragen werden.

In Fig. 5 steckt die Drehzahlinformation in der Frequenz f bzw. in dem Abstand zwischen den aufsteigenden Flanken der Pulse 16. Im Diagramm nach Fig. 5b) ist ein zusätzlicher Puls 17 vorgesehen, der in Verbindung mit Puls 16 die Gegenbezugsrichtung der Encoderdrehung kennzeichnet, während gemäß Fig. 5a) ein alleiniger Puls 16 bzw. das Ausbleiben des Pulses (18) eine Encoderdrehung in Bezugsrichtung signalisiert. Die Pulsmuster wiederholen sich mit der Encoderfrequenz, deren Periodendauer hier mit 100 % bezeichnet ist. Die dem Puls 17 folgende Pulskette mit der zeitlichen Gewichtung 1,2,4,8 innerhalb der Zeitspanne t₁ dient im folgenden Beispiel zur Codierung zusätzlicher Statusinformationen.

In den Fig. 5c) und d) geschieht die Codierung über die gewichtete Stromamplitude, wobei in die Startamplitude jeder Sequenz die V/R-Information codiert ist. Wenn (Fig. 5c)) die Amplitude mit 80 % des Sollwertes beginnt, dann bedeutet dies, daß der Encoder 3(E) sich in Bezugsrichtung dreht. Wenn (Fig. 5 d)) die Amplitude mit 100 % beginnt, bedeutet dies, daß der Encoder (E) sich in Gegenbezugsrichtung dreht. In den nachfolgenden Zeitabschnitten von t2 ist in den Stromamplituden 20 %, 40 %, 60 %, 80 % die Gewichtung 1,2,4,8 enthalten, die zugleich in den entsprechenden %-Zeitpunkten von t1 erwartet werden kann.

Grundsätzlich kann ein Statussignal oder eine andere Information dem eigentlichen Drehzahl-Signal, das durch eingeprägte Ströme wechselnder Amplitude dargestellt ist, auf sehr unterschiedliche Weise überlagert werden. Das zusätzliche Signal oder Statussignal Grundsätzlich kann durch Digitalcodierung - ähnlich Fig. 5a) und Fig. 5b) -, durch Überlagerung eines relativ hochfrequenten Signals, durch Frequenz- oder Pulsbreitenmodulation usw. über die Anschlußleitungen 7,8 übertragen werden. Die Fig. 5a) bis d) beziehen sich also nur auf willkürliche Ausführungsbeispiele zur Erläuterung des Prinzips.

## Patentansprüche

1. Anordnung zur Erfassung des Drehverhaltens eines Rades oder eines anderen rotierenden Körpers, mit einem aktiven Sensor, der ein Sensorelement umfaßt, einem Modulator und mit einer Auswerteschaltung, der als Eingangssignal ein das Drehverhalten darstellendes Signal mit einem überlagerten Status- oder Zusatzsignal zugeführt wird, **dadurch gekennzeichnet, daß** die Anordnung ein Sensormodul (1) aufweist, das das Sensorelement (2; 2.1 bis 2.4), eine Stromquelle (4) und den Modulator (5)umfaßt, wobei der Modulator (5) in Abhängigkeit von den Signalen des Sensorelementes (2; 2.1 bis 2.4) und von externen Signalen, die von einer externen Signalquelle stammen bzw. über einen zusätzlichen Anschluß (K5) in das Sensormodul (1) eingespeist werden, die Stromquelle (4) steuert, die als Ausgangssignal des Sensormoduls (1) ein das Drehverhalten darstellendes, eingeprägtes Stromsignal an die Auswerteschaltung (9) liefert.

2. Anordnung nach Anspruch 1, **dadurch gekennzeichnet, daß** das Sensormodul (1) über Signalleitungen (7,8) mit der Auswerteschaltung (9) verbunden ist und daß die Auswerteschaltung die Betriebsspannung (V_{B}) bzw. die elektrische Energie zum Betrieb der steuerbaren Stromquelle über die Signalleitungen (7,8) liefert.

3. Anordnung nach Anspruch 1 oder 2, **dadurch gekennzeichnet, daß** das Sensorelement(2; 2.1 bis 2.4) in Form eines Meßwertaufnehmers ausgebildet ist, der mit einem Meßwertgeber oder Encoder (3), welcher mit dem Körper rotiert, dessen Drehverhalten gemessen werden soll, über einen Luftspalt magnetisch gekoppelt ist.

4. Anordnung nach einem oder mehreren der Ansprüche 1 bis 3, **dadurch gekennzeichnet, daß** das Sensorelement(2; 2.1 bis 2.4) aus mehreren sensorischen Einheiten zum Abtasten des Meßwertgebers oder Encoders (3) nach unterschiedlichen Kriterien und/oder zum redundanten Erkennen von Meßwerten besteht.

5. Anordnung nach einem oder mehreren der Ansprüche 1 bis 4, **dadurch gekennzeichnet, daß** das Sensormodul (1) einen Beobachter (6) enthält, der an das Sensormodul(1) mit der Auswerteschaltung verbindenden Signalleitungen (7,8) angeschlossen ist, über diese Leitungen Informationen aufnimmt und der in Abhängigkeit von diesen Informationen die Akzeptanz oder Verarbeitung der über den Zusatzanschluß (K5) zugeführten Informationen oder Signale steuert oder überwacht.

6. Anordnung nach einem oder mehreren der Ansprüche 1 bis 5, **dadurch gekennzeichnet, daß** über den Zusatzanschluß (K5) eine externe Signalquelle angeschlossen ist, die unabhängig von den Sensorelementen (2; 2.1 bis 2.4) des Sensormoduls (1) ein von der Drehbewegung des rotierenden Körpers abgeleitetes Signal erzeugt.

7. Anordnung nach einem oder mehreren der Ansprüche 1 bis 6, **dadurch gekennzeichnet, daß** sensorisch ermittelte Statussignale über den Zusatzanschluß (K5) eingespeist und über den Modulator (5) sowie über die Signalleitungen (7,8) zu der Auswerteschaltung (9) weitergeleitet werden.

8. Anordnung nach Anspruch 7, **dadurch gekennzeichnet, daß** die Statussignale vor dem Weiterleiten in dem Modulator (5) aufbereitet und/oder ausgewertet werden.

9. Anordnung nach den Ansprüchen 5 und 7 bzw. 8, **dadurch gekennzeichnet, daß** die Weiterleitung, Aufbereitung und/oder Auswertung im Modulator (5) von dem Beobachter (6) gesteuert wird.

## Claims

1. Arrangement for determining the rotational behavior of a wheel or any other rotating body, with an active sensor which includes a sensor element, with a modulator, and an evaluating circuit into which is introduced, as an input signal, a signal representative of the rotational behavior with a superimposed status signal or additional signal,
**characterized in that** the arrangement includes a sensor module (1) which comprises the sensor element (2; 2.1 to 2.4), a power source (4), and the modulator (5), wherein the modulator (5) controls the power source (4) as a function of the signals of the sensor element (2; 2.1 to 2.4) and of external signals originating from an external signal source and introduced into the sensor module (1) through an additional port (K5), and the power source supplies as an output signal of the sensor module (1) a load-independent current signal representative of the rotational behavior to the evaluating circuit (9).

2. Arrangement as claimed in claim 1,
**characterized in that** the sensor module (1) is connected to the evaluating circuit (9) by way of signal lines (7, 8), and **in that** the evaluating circuit supplies the operating voltage (V_{B}) or, respectively, the electric energy for operating the controllable power source by way of the signal lines (7, 8).

3. Arrangement as claimed in claim 1 or claim 2,
**characterized in that** the sensor element (2; 2.1 to 2.4) is configured as a pick-up for measuring data which is magnetically coupled by way of an air slot to a measuring data emitter or encoder (3) rotating with the body whose rotational behavior shall be measured.

4. Arrangement as claimed in any one of more of claims 1 to 3,
**characterized in that** the sensor element (2; 2.1 to 2.4) includes several sensor units for scanning the measuring data emitter or encoder (3) according to different criteria and/or for redundantly identifying measuring values.

5. Arrangement as claimed in any one or more of claims 1 to 4,
**characterized in that** the sensor module (1) includes an observer (6) which is connected to signal lines (7, 8) interconnecting the sensor module (1) to the evaluating circuit, the observer receiving data by way of these lines, and controlling or monitoring, in dependence on these data, the acceptance or processing of the data or signals introduced by way of the additional port (K5).

6. Arrangement as claimed in any one or more of claims 1 to 5,
**characterized in that** an external signal source is connected by way of the additional port (K5) and produces a signal derived from the rotational movement of the rotating body irrespective of the sensor elements (2; 2.1 to 2.4) of the sensor module (1).

7. Arrangement as claimed in any one or more of claims 1 to 6,
**characterized in that** status signals determined by sensor means are introduced through the additional port (K5) and conducted to the evaluating circuit (9) by way of the modulator (5) and the signal lines (7, 8).

8. Arrangement as claimed in claim 7,
**characterized in that** the status signals are conditioned and/or evaluated in the modulator (5) prior to their transmission.

9. Arrangement as claimed in claims 5 and 7 or claim 8,
**characterized in that** the transmitting, conditioning and/or evaluating operations in the modulator (5) are controlled by the observer (6).

## Revendications

1. Ensemble pour l'enregistrement le comportement de rotation d'une roue ou d'un autre corps tournant, comportant un palpeur actif prévu d'un élément palpeur, d'un modulateur et d'un circuit d'évaluation auquel est alimenté un signal comme signal d'attaque représentant le comportement de rotation, avec un signal d'état superposé ou un signal supplémentaire, **caractérisé en ce que** l'ensemble comporte un module palpeur (1), que l'élément palpeur (2 ; 2.1 à 2.4) comporte une source de courant et le modulateur (5), que le modulateur (5) en dépendence des signaux de l'élément palpeur (2 ; 2.1 à 2.4) et des signaux externes provenant d'une source de signal externe ou étant alimenté dans le module (1) par l'intermédaire d'un raccord (K5) supplémentaire, contrôle la source de courant (4) délivrant comme signal de sortie du module (1) au circuit d'évaluation (9) un signal de courant empreint que représente le comportement de rotation.

2. Ensemble selon la revendication 1, caractérsié en ce que le module palpeur (1) par l'intermédaire des conduites de signal (7, 8) est raccordé au circuit d'évaluation (9), et que le circuit d'évaluation délivre le voltage de service (V_{B}) respectivement l'énergie électrique pour le service de la source de courant contrôllable par l'intermédaire des conduites de signal (7, 8).

3. Ensemble selon les revendications 1 ou 2, **caractérisé en ce que** l'élément palpeur (2 ; 2.1 à 2.4) est sous forme d'un capteur de mesure magnétiquement couplé par l'intermédaire d'une fente d'aération à un capteur de mesure ou un appareil à coder (3) tournant avec le corps le comportement de rotation duquel est à mesurer.

4. Ensemble selon l'une des revendications 1 à 3, **caractérisé en ce que** l'élément palpeur (2 ; 2.1 à 2.4) consiste de plusieurs dispositifs sensoriques pour toucher le capteur ou l'appareille à coder (3) par des critères différents et/ou pour identifier de valeurs mesurées de manière redondante.

5. Ensemble selon l'une ou plusieurs des revendications 1 à 4, **caractérisé en ce que** le module palpeur (1) contienne un observateur (6) raccordé aux conduites reliant le module palpeur (1) avec le circuit d'évaluation, pour acceuillir des informations par l'intermédaire de ces conduites et pour contrôler ou surveiller en dépendance de ces informations l'acceptance ou le traitement des informations ou signaux alimentés à travers du raccord supplémentaire (K5).

6. Ensemble selon l'une ou plusieurs des revendications 1 à 5, **caractérisé en ce qu'**une source de signal externe est raccordée par l'intermédiaire de raccord supplémentaire (K5) produisant indépendemmant des éléments palpeur (2 ; 2.1 à 2.4) un signal dérivé du mouvement de rotation du corps tournant.

7. Ensemble selon l'une ou plusieurs des revendications 1 à 6, **caractérisé en ce que** des signaux d'état déterminés sensoriquement sont alimentés par l'intermédiare de raccord supplémentaire (K5) et transmis par l'intermédaire de modulateur (5) et des conduites de signal (7,8) au circuit d'évaluation (9).

8. Ensemble selon la revendication 7, caratérisé en ce que les signaux d'état sont processés et/ou évalués avant la transmission au modulateur.

9. Ensemble selon les revendications 5 et 7 respectivement 8, **caractérisé en ce que** la transmission, le traitement et/ou l'évaluation dans le modulateur (5) sont contrôlés par l'observateur (6).
